# EUROPEAN PATENT SPECIFICATION

(11) **EP 3 381 401 B1**
(45) Date of publication and mention of the grant of the patent: **05.08.2020**
(21) Application number: 18382196.6
(22) Date of filing: 23.03.2018
(51) Int. Cl.: A61C 8/00

(54) **SYSTEM FOR PRODUCING A DENTAL PROSTHESIS**
SYSTEM ZUR HERSTELLUNG EINER ZAHNPROTHESE
SYSTÈME DE PRODUCTION D'UNE PROTHÈSE DENTAIRE

(30) Priority: 29.03.2017 ES 201730357 U
(43) Date of publication of application: 03.10.2018
(73) Proprietor: Xam-Mar Mangrane, Esteban, 25002 Lleida (ES)
(72) Inventor: Xam-Mar Mangrane, Esteban, 25002 Lleida (ES)
(74) Representative: Carlos Hernando, Borja

(56) References cited:
- EP-A1- 3 020 358
- EP-A1- 3 023 078
- US-A1- 2003 082 498

## Description

### OBJECT OF THE INVENTION

The present invention relates to a system for producing screw-type dental protheses, enabling the contact surface between the structure and addition or interface to be extended or reduced as needed, choosing from the different lengths available. This customization is carried out during the creation of the dental prothesis. It is a practical, streamlined system in which the most appropriate retention height for the work to be carried out is chosen. It is designed for use with CAD/CAM technology.

The field of application of the present invention pertains to the sector of odontology - dental implantology, specifically focused on the area of dental implants and, in particular, the structures that are screwed on dental implants with passive fit. The dental CAD/CAM system (CAD computer-aided design; and CAM computer-aided manufacturing) allows for the creation of computer-designed and manufactured dental protheses.

### BACKGROUND OF THE INVENTION

A document in the art is exemplified by EP 3 020 358 A1.

Many different systems and solutions currently exist to obtain a functional dental prothesis. One of them is the use of biocompatible elements located between the implant and the dental prothesis, known as bases or interfaces. These bases are stump-shaped parts, screwed on the implant (non-visible part that is inserted into the jaw bone) and on which the dental structure (visible, external part that imitates the dental part or parts) is permanently cemented with a specific dual cement. Another alternative is that said bases are welded to the structure, which depends on the design of the prothesis and the materials used.

The base is used to achieve a passive fit of the structure on the implants, since the structure is cemented or welded to the bases at the end of the manufacturing process of the prothesis, thereby obtaining a structure without tensions.

The bases can have a frustoconical body or a straight body, internally having straight or conical seating for the screw, and connection according to the implant type, internal or external and non-rotational or rotational, to achieve the correct final positioning thereof. Bases can also be found that correct problems of incorrect positioning (whether they come from the implant or not), as in the European patent application number EP-3023078-A1.

However, current base designs only take into account the length of a retention body, regardless of the dimensions of the prothesis to be made. Many times this length is not sufficient since there is an imbalance between the height of the base and the height of the prothesis, causing tensions that entail breakage problems of the prothesis, loss of the implants, bone loss, etc.

The present invention develops a new base type that does not exist currently with different retention heights, which allows the technician to choose the desired retention surface between the base and dental prothesis in order to obtain a better interface height/prothesis height ratio. This base also enables positioning problems to be corrected by means of the possibility of angling the screw access channel with respect to the longitudinal axis of the base.

### DESCRIPTION OF THE INVENTION

The present invention is directed to a system as defined by claim 1.

The dental bases, interfaces or additions are used to produce screw-type dental protheses on implants with passive fit, generally produced with CAD/CAM systems. By means of these design and manufacturing systems and the use of digital libraries in the different CAD/CAM software used, it is possible to produce customized dental structures that are supported on the dental base. By being customized, the dental protheses can have dimensions that vary significantly; however, the bases available on the market generally have a cemented/welded length between 3 adn 5 mm and they cannot be adapted based on the prothesis to be produced.

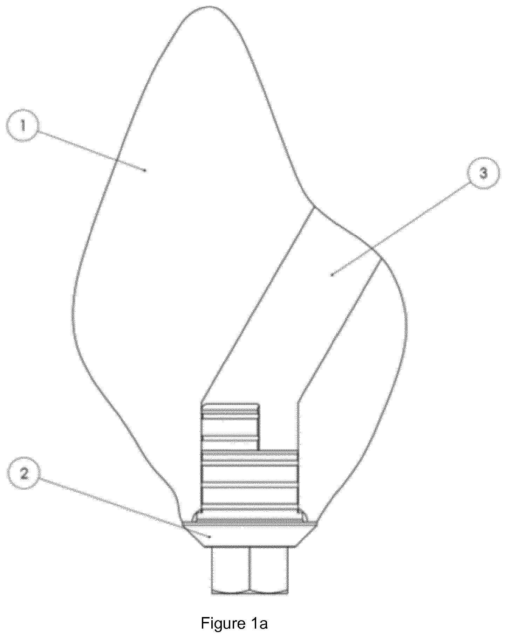

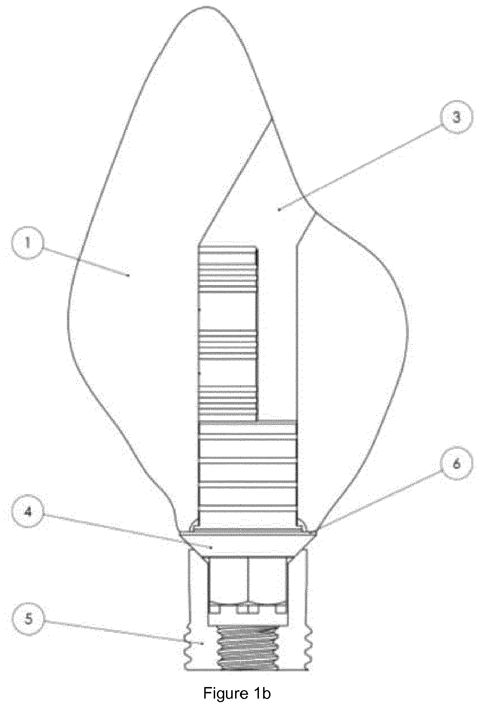

The element object of the invention is a dental base, interface or addition, preferably made of titanium, especially designed to compensate the mechanical stress that can be produced due to the differences of height between the interface or base and the dental structure (see Figures 1a and 1b). The dental interface object of the present application enables the length of the retention body of said interface to be adapted based on the dimensions of the structure to be made, maximizing the contact surface between both elements, and therefore improving the stability of the final prothesis.

Specifically, the interface object of the invention is of the type that connects to a dental implant by means of a screw and comprises three different sections along the longitudinal axis thereof:
- a hollow proximal connection end with the implant with a connection element, which can have internal or external and/or rotational or non-rotational connection, also having an inner screw seating surface that can be flat or curved.
- a hollow intermediate area after the proximal end with an outer platform on which a dental structure will be supported, and
- a retention body with an inner through hole that defines the distal end of the interface and arranged after the intermediate area, having at least one cutting indication, preferably between two and five located at different heights, on the surface thereof that indicates at least one length where a cut of the retention body can be made, making the length thereof adjustable.

Said cutting indications are notches and/or etchings and/or marks and/or grooves and/or colors and/or letters and/or numbers on the outer surface of the retention body. The hollows of the proximal end and of the intermediate area along with the through hole of the retention body form a screw access channel that can have a diameter that varies along the longitudinal axis.

Likewise, the interface can have, on the retention body thereof and next to the distal end, a transverse cut or mortise that allows a screwdriver that is inclined with respect to the longitudinal axis of the interface to access the screw, such that the screw and the screwdriver can be inserted through an angled channel existing in the structure, part or dental prothesis.

The shape of the interface can vary, such that the retention body can:
- comprise a transverse cross section to the longitudinal axis that is constant or variable,
- comprise on the outer surface thereof at least one cut parallel to the plane formed between the generatrix of the retention body and the shaft of the retention body itself,
- comprise grooves in the outer surface thereof that increase the contact surface between the interface or base and the structure, part or dental prothesis, favoring and improving adherence between both elements,
   and/or
- have an outer cylindrical, conical, cylindrical-conical or prismatic shape.

The interface object of the present invention comprises at least one associated CAD library and corresponding CAD library. The customization of the height of the addition, base or interface to be adapted to the prothesis is completed by using a CAD library for different dental CAD software. The interface and library allow said height to be customized. As such, the interface object of the present invention is designed for the excluisve use thereof with CAD/CAM technology that requires the aforementioned libraries of design.

### BRIEF DESCRIPTION OF THE FIGURES

By way of explanation and not limitation, the following figures that describe the aspects of the invention in greater detail with the aim of making the invention more readably understandable are included.
Figure 1 shows a view of a dental superstructure formed by a dental interface (cross section) and an interface or base according to the state of the art.
Figure 1b shows a first embodiment of a dental superstructure formed by an interface or base object of the present invention and a dental prothesis (cross section).
Figure 1c shows the interface or base of the preceding figure prior to the coupling or assembly with the dental prothesis (cross section).
Figure 2a shows the first embodiment of the invention shown in Figures 1b and 1c.
Figure 2b shows a plan elevation view and a partial cross-section view of the first embodiment of the invention shown in Figure 2a.
Figure 3 shows a perspective view of a second embodiment of the present invention.

### DESCRIPTION OF PREFERRED EMBODIMENTS

Two embodiments of the invention with reference to the figures include in the present specification are described below.

Figure 1a shows a dental superstructure according to the state of the art that is formed by a dental prothesis and a base, interface or addition (2) that has a cemented height smaller than 5 mm, such that an imbalance between the dental structure (1) and the base (2) is mainly observed in the contact surface therebetween and it is limited by the height of the base.

The addition, base or interface (4) is formed by a first connection area (11) with the implant (5), an intermediate area (10) between the connection area and the retention body (9) which constitutes the surface or platform (6) on which the dental structure (1) is supported, and the retention body (9) that is in contact with the dental structure (1) and with a length that can be adjusted, preferibly between a minimum of 4 mm and a maximum of 10 mm, based on the contact surface needed to produce the prothesis.

The connection area (11) with the implant (5) is hollow and incorporates the connection element (17, 18), which can be internal or external and rotational or non-rotational, as well as the seating surface (21) of the adjustment screw that can be flat or curved and the screw access channel (20), all of which are based on the compatibility of the implant (5) that can have different characteristics depending on its manufacturer.

The intermediate area (10) between the connection area (11) and the retention body (9) is hollow and comprises the surface or platform (6) on which the dental structure (1) is supported and starts.

The retention body (9) is the area that is in contact with the dental structure (1). It has a preferably cylindrical geometry, but it can also be prismatic, conical or cylindrical-conical, the transverse cross section thereof varying in shape and/or diameter. It has an inner through hole (20) or inner straight channel, for screw access, with a varying diameter based on the implant compatibility. The outer surface of the retention body (9) can have grooves (13) that improve adherence between the interface or base (4) and the dental structure (1).

The height of the retention body (9) varies, having at least one, and preferably between two and five available cutting heights. This height can be chosen based on the prothesis (1) to be produced when the work is carried out. To do so, the retention body (9) has indications (14, 15) in the shape of grooves and/or marks (14, 15) that indicate the corresponding cutting height. The different lengths available are associated with the corresponding CAD library, one element not being functional without the other.

The distal end of the retention body (9) can have a transverse cut to the longitudinal axis that corrects problems of incorrect positioning when required. This cut or mortise forms an opening (12, 19) designed to facilitate screw and screwdriver access through the angled channel (3) of the dental structure (1), such that it enables the screw to be screwed or unscrewed when the screwdriver shaft is not aligned with the screw shaft.

As mentioned above, the dental structure (1) is supported on the interface or base (4) on a flat or curved closing surface (6) (xy), depending to the embodiment. The closing curved surface enables the aesthetics of the dental prothesis to be improved.

In turn, the internal geometry of the straight channel (7) of the dental structure (1) adapts to the external geometry of the interface (4), due to the use of digital CAD libraries. This contact surface between the dental structure (1) and the interface or base can incorporate one or several cuts (16, 22) or notches to secure the interface (4) and prothesis (1) assembly and prevent the rotation of the dental prothesis (1) around the z axis that coincides with the longitudinal axis of the interface (4). The interface (4) and dental structure (1) assembly is secured by means of the cementing or welding of both elements.

According to Figures 1b, 1c, 2a, 2b and 3, the main characteristics of the exemplary embodiments of the present invention are specifically described.

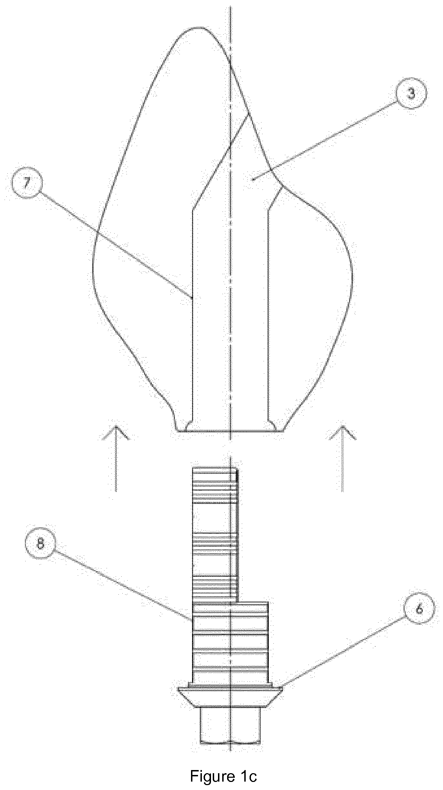

Figures 1b and 1c show a first embodiment of a dental superstructure formed by the interface object of the invention (4) and a dental prothesis (1). The inner surface (7) of the prothesis (1) is connected to the outer surface (8) of the interface (4), adjusting the prothesis (1) and interface or base (4) and preventing the rotation therebetween. The length of the interface (4) adapts to the height of the dental structure (1) by means of predefined cuts (14). By adapting the height of the body (9) to the dental prothesis (1), a contact surface larger than in Figure 1 is achieved between the structure (1) and the interface (4), thus improving the stability of the assembly.

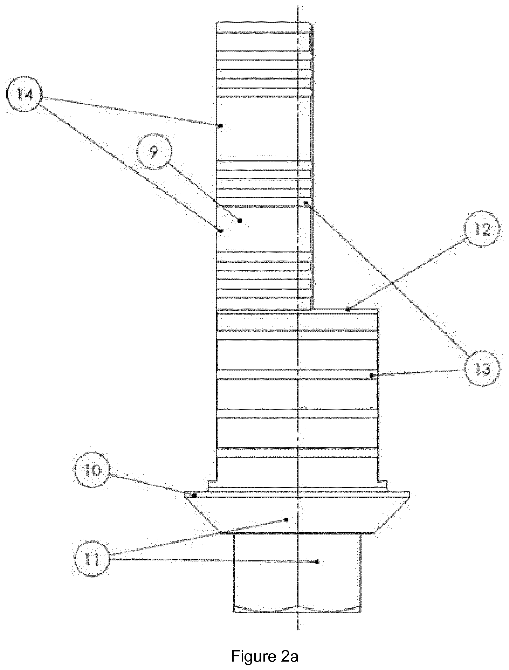

Figure 2a shows the first embodiment of the interface (4) of the invention without the dental structure (1). The three areas that form it are shown; in other words, the connection area (11), the intermediate area (10) and the retention body (9). It has a cut (12) perpendicular to the longitudinal axis that constitutes the access for the angled channel (3) of the prothesis (1) that enables the screw to be introduced for the adjustment thereof. Likewise, the notches or grooves (13) that increase the contact surface with the structure, improving the grip therebetween, are shown.

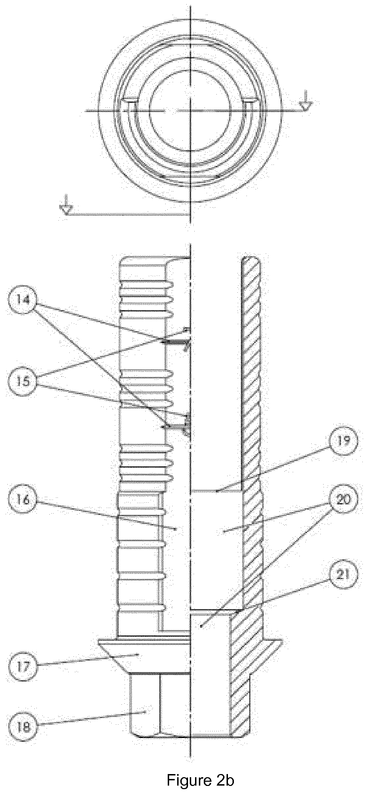

Figure 2b shows a partial cross-section view of the first embodiment of the invention shown in Figure 2a. It has two longitudinal cuts (16) and a diameter of the body (9) with a cylindrical geometry that varies based on the height. The indications (14), notches or grooves that indicate the different cutting heights of the body (9) of the interface or base (4) can be seen. The cutting heights in this embodiment have been identified by means of notches, etchings or marks (14, 15). The figure shows the inner surface of the interface (4) with the straight channel area of screw access (20) and the screw seating (21).

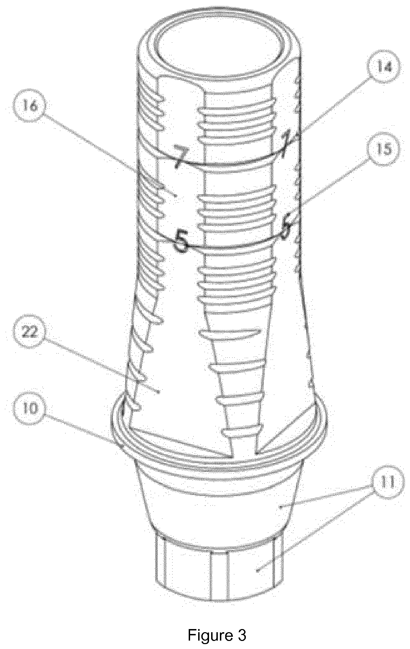

Figure 3 shows a second embodiment of the invention that has four longitudinal cuts or flat faces (16) and the body (9) with cylindrical-conical geometry with a varying diameter and without a mortise like in the previous embodiment. It is seen how the lower section (22) of the body (9) has a smaller diameter than the upper section thereof. The intermediate area (10) connects the body (9) of the interface (4) to the connection area (11). In this embodient, the cut is indicated by means of identifications in the shape of notches or grooves (14) that extend 360° around the body.

## Claims

1. System for producing, using CAD/CAM technology, a screw-type dental prosthesis to be connected to a dental implant (5), comprising:
- A structure of a dental prosthesis (1),
- An interface (4) to be introduced into the structure (1), the interface having a screw channel and a longitudinal axis,
- A screw for connecting the interface (4) to the dental implant (5) and therefore securing the dental prosthesis (1) on the dental implant (5), and
- At least one digital CAD library in a CAD/ CAM software, associated to the interface (14) and to the structure of the dental prosthesis (1), wherein the interface (4) comprises three different sections along the longitudinal axis thereof:
- a hollow proximal end (11), with a connection element (17, 18) for connecting to the implant (5),
- a hollow intermediate area (11), after the proximal end, with an outer platform (6) on which the dental structure (1) will be supported, and
- a retention body (9) with an inner through hole that defines a distal end of the interface and arranged after said intermediate area (10), said retention body having at least one cutting indication (14, 15), in the shape of notches, etchings. colours, grooves and/ or marks, on the surface thereof that indicates at least one length where a cut of the retention body (9) can be made, thus making the length of the retention body (9) adjustable to be adapted to the structure (1) based on the dimensions of said structure (1) maximizing the contact surface between an outer surface (8) of the interface (4) and an inner surface (7) of a channel (3) in the structure (1), wherein said surfaces are adapted to each other due to the use of the digital CAD library, wherein the different available lengths of the retention body (9) are associated with the digital CAD library, said lengths being adjustable between 4 mm and 10 mm.

2. The system according to claim 1, **characterized in that** the retention body (9) comprises between two and five cutting indications at different heights.

3. The system according to any preceding claim, **characterized in that** the retention body (9) comprises a transverse cut or mortise (12, 19) next to the distal end that allows a screwdriver that is inclined with respect to the longitudinal axis of the interface to access the screw.

4. The system according to any preceding claim, **characterized in that** the retention body (9) comprises a transverse cross section to the longitudinal axis that is constant or variable.

5. The system according to any preceding claim, **characterized in that** the interface comprises on the surface thereof at least two longitudinal cuts (16) or flat faces.

6. The system according to any preceding claim, **characterized in that** the interface comprises grooves (13) that increase the contact surface between the interface (4) and the dental structure (1), improving adherence between both elements.

7. The system according to any preceding claim, **characterized in that** the connection of the connection element (17, 18) is internal or external and/or rotational or non-rotational.

8. The system according to any preceding claim, **characterized in that** the proximal end (11) comprises a flat or curved inner screw seating surface.

9. The system according to any preceding claim, **characterized in that** the retention body has an outer cylindrical, conical, cylindrical-conical or prismatic shape.

## Patentansprüche

1. System zur Herstellung einer Zahnprothese vom Schraubentyp, die mit einem Zahnimplantat (5) zu verbinden ist, unter Verwendung der CAD/CAM-Technologie, Folgendes umfassend:
- Eine Struktur einer Zahnprothese (1),
- Eine Koppelung (4), die in die Struktur (1) einzuführen ist, wobei die Koppelung einen Schraubenkanal und eine Längsachse aufweist,
- Eine Schraube zur Verbindung der Koppelung (4) mit dem Zahnimplantat (5) und damit zur Befestigung der Zahnprothese (1) auf dem Zahnimplantat (5), und
- Mindestens eine digitale CAD-Bibliothek in einer CAD/CAM-Software, die der Koppelung (14) und der Struktur der Zahnprothese (1) zugeordnet ist, wobei die Koppelung (4) drei verschiedene Abschnitte entlang ihrer Längsachse umfasst:
- ein hohles proximales Ende (11) mit einem Verbindungselement (17, 18) zur Verbindung mit dem Implantat (5),
- einen hohlen Zwischenbereich (11) im Anschluss an das proximale Ende mit einer äußeren Plattform (6), auf der die Zahnstruktur (1) abgestützt werden soll, und
- einen Rückhaltekörper (9) mit einem inneren Durchgangsloch, der ein distales Ende der Koppelung definiert und im Anschluss an den Zwischenbereich (10) angeordnet ist, wobei der Rückhaltekörper mindestens eine Schnittanzeige (14, 15) in Form von Kerben, Ätzungen, Farben, Nuten und/oder Markierungen auf seiner Oberfläche aufweist, die mindestens eine Länge anzeigt, auf der ein Schnitt des Rückhaltekörpers (9) durchgeführt werden kann, wodurch die Länge des Rückhaltekörpers (9) einstellbar ist, um an die Struktur (1) angepasst zu werden, basierend auf den Abmessungen der Struktur (1), wobei die Kontaktfläche zwischen einer äußeren Oberfläche (8) der Koppelung (4) und einer inneren Oberfläche (7) eines Kanals (3) in der Struktur (1) maximiert wird, wobei die Oberflächen aufgrund der Verwendung der digitalen CAD-Bibliothek aneinander angepasst sind, wobei die verschiedenen verfügbaren Längen des Rückhaltekörpers (9) mit der digitalen CAD-Bibliothek zusammenhängen, wobei die Längen zwischen 4 mm und 10 mm einstellbar sind.

2. System gemäß Anspruch 1, **dadurch gekennzeichnet, dass** der Rückhaltekörper (9) zwischen zwei und fünf Schnittanzeigen auf unterschiedlichen Höhen umfasst.

3. System gemäß einem der vorhergehenden Ansprüche, **dadurch gekennzeichnet, dass** der Rückhaltekörper (9) neben dem distalen Ende einen querverlaufenden Schnitt bzw. Ausklinkung (12, 19) umfasst, der/die einem Schraubendreher, der in Bezug auf die Längsachse der Koppelung geneigt ist, den Zugang zur Schraube ermöglicht.

4. System gemäß einem der vorhergehenden Ansprüche, **dadurch gekennzeichnet, dass** der Rückhaltekörper (9) einen Querschnitt bezüglich der Längsachse umfasst, der gleichbleibend oder variabel ist.

5. System gemäß einem der vorhergehenden Ansprüche, **dadurch gekennzeichnet, dass** die Koppelung auf ihrer Oberfläche mindestens zwei Längsschnitte (16) oder ebene Flächen umfasst.

6. System gemäß einem der vorhergehenden Ansprüche, **dadurch gekennzeichnet, dass** die Koppelung Nuten (13) umfasst, die die Kontaktfläche zwischen der Koppelung (4) und der Zahnstruktur (1) vergrößern, wodurch die Haftung zwischen den beiden Elementen verbessert wird.

7. System gemäß einem der vorhergehenden Ansprüche, **dadurch gekennzeichnet, dass** die Verbindung des Verbindungselements (17, 18) intern oder extern und/oder drehbeweglich oder nicht drehbeweglich ist.

8. System gemäß einem der vorhergehenden Ansprüche, **dadurch gekennzeichnet, dass** das proximale Ende (11) eine flache oder gekrümmte innere Schraubensitzfläche umfasst.

9. System gemäß einem der vorhergehenden Ansprüche, **dadurch gekennzeichnet, dass** der Rückhaltekörper eine äußere zylinderförmige, kegelförmige, zylindrisch-kegelförmige oder prismatische Form aufweist.

## Revendications

1. Système de production, à l'aide de la technologie CAO/FAO, d'une prothèse dentaire de type vis à relier à un implant dentaire (5), comprenant :
- Une structure d'une prothèse dentaire (1),
- Une interface (4) à introduire dans la structure (1), l'interface ayant un canal de vis et un axe longitudinal,
- Une vis pour relier l'interface (4) à l'implant dentaire (5) et donc pour fixer la prothèse dentaire (1) sur l'implant dentaire (5), et
- Au moins une bibliothèque numérique de CAO dans un logiciel de CAO/FAO, associée à l'interface (14) et à la structure de la prothèse dentaire (1), dans laquelle l'interface (4) comprend trois sections différentes le long de son axe longitudinal :
- une extrémité proximale creuse (11), avec un élément de connexion (17, 18) pour la connexion à l'implant (5),
- une zone intermédiaire creuse (11), après l'extrémité proximale, avec une plate-forme extérieure (6) sur laquelle la structure dentaire (1) sera soutenue, et
- un corps de rétention (9) avec un trou traversant intérieur qui définit une extrémité distale de l'interface et disposé après ladite zone intermédiaire (10), ledit corps de rétention ayant au moins une indication de coupe (14, 15), sous la forme d'entailles, de gravures, de couleurs, de rainures et/ou de marques, sur sa surface qui indique au moins une longueur où une coupe du corps de rétention (9) peut être effectuée, rendant ainsi la longueur du corps de rétention (9) réglable pour être adaptée à la structure (1) sur la base des dimensions de ladite structure (1) maximisant la surface de contact entre une surface extérieure (8) de l'interface (4) et une surface intérieure (7) d'un canal (3) dans la structure (1), dans lequel lesdites surfaces sont adaptées l'une à l'autre en raison de l'utilisation de la bibliothèque CAO numérique, dans lequel les différentes longueurs disponibles du corps de rétention (9) sont associées à la bibliothèque CAO numérique, lesdites longueurs étant réglables entre 4 mm et 10 mm.

2. Système selon la revendication 1, **caractérisé en ce que** le corps de rétention (9) comprend entre deux et cinq indications de coupe à différentes hauteurs.

3. Système selon toute revendication précédente, **caractérisé en ce que** le corps de rétention (9) comprend une coupe transversale ou mortaise (12, 19) à côté de l'extrémité distale qui permet à un tournevis incliné par rapport à l'axe longitudinal de l'interface d'accéder à la vis.

4. Système selon toute revendication précédente, **caractérisé en ce que** le corps de rétention (9) comprend une section transversale par rapport à l'axe longitudinal qui est constante ou variable.

5. Système selon toute revendication précédente, **caractérisé en ce que** l'interface comporte sur sa surface au moins deux coupes longitudinales (16) ou faces planes.

6. Système selon toute revendication précédente, **caractérisé en ce que** l'interface comprend des rainures (13) qui augmentent la surface de contact entre l'interface (4) et la structure dentaire (1), améliorant l'adhérence entre les deux éléments.

7. Système selon toute revendication précédente, **caractérisé en ce que** la connexion de l'élément de connexion (17, 18) est interne ou externe et/ou rotative ou non rotative.

8. Système selon toute revendication précédente, **caractérisé en ce que** l'extrémité proximale (11) comprend une surface intérieure d'assise de vis plane ou incurvée.

9. Système selon toute revendication précédente, **caractérisé en ce que** le corps de rétention a une forme extérieure cylindrique, conique, cylindro-conique ou prismatique.
